# EUROPEAN PATENT SPECIFICATION

(11) **EP 2 781 390 B1**
(45) Date of publication and mention of the grant of the patent: **07.03.2018**
(21) Application number: 12849748.4
(22) Date of filing: 04.09.2012
(51) Int. Cl.: B60K 6/40, B60K 11/04, B60K 11/06, B60K 11/08, B60H 1/34

(54) **COOLING WIND INTRODUCTION STRUCTURE**
KÜHLUNGSWIND-EINLASSSTRUKTUR
STRUCTURE D'INTRODUCTION DE VENT DE REFROIDISSEMENT

(30) Priority: 15.11.2011 JP 2011249950
(43) Date of publication of application: 24.09.2014
(73) Proprietor: TOYOTA JIDOSHA KABUSHIKI KAISHA, Toyota-shi, Aichi 471-8571 (JP)
(72) Inventor: AJISAKA, Satoshi, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/072505
(87) International publication number: WO 2013/073262

(56) References cited:
- EP-A1- 2 602 143
- WO-A1-2010/097890
- WO-A1-2011/151917
- WO-A1-2012/017521
- JP-A- H05 301 528
- JP-A- 2002 155 504
- JP-A- 2002 155 504
- JP-A- 2011 102 068
- JP-U- H0 479 724
- US-A1- 2003 019 232
- US-A1- 2003 029 581
- US-A1- 2010 147 611

## Description

### Technical Field

The present invention relates to a cooling wind introduction structure.

### Background Art

There is a structure in which a power unit is disposed within an engine room (a power unit chamber), and a cooling unit (a heat exchanger) is disposed at the vehicle rear side of the power unit (see, for example, Patent Document 1). In such a structure, for example, there are cases in which the engine room is covered by an under cover from the vehicle lower side, and the cooling unit is cooled by traveling wind at the lower side of the under cover.
Furthermore, Patent Document 2 discloses a "Shutter for Closing Openings with Pivotal Shutter Elements", wherein wind or air flow is introduced through inlet openings in a front end of a power unit chamber housing a power unit that generates driving force for a vehicle to travel, and is passed by the power unit through an outlet opening towards the occupant compartment. According to that structure, the shutters are arranged to open or close both the inlet openings and the outlet openings.

### Prior Art Documents

### Patent Documents

[Patent Document 1] WO2010/097890 A1
[Patent Document 2] US 2003/0029581 A1
[Patent Document 3] US 2003/0019232 A1 that shows the features of the preamble of claim 1.
[Patent Document 4] EP 2 602 143 A1, which is prior art according to Article 54(3) EPC.

### SUMMARY OF INVENTION

### Technical Problem

However, in this structure, when heat is confined within the engine room for example, the air at the lower side of the under cover is warmed, and therefore, there is room for improvement from the standpoint of efficiently cooling the cooling unit.

In view of the above-described circumstances, an object of the present invention is to provide a cooling wind introduction structure that can efficiently cool a heat exchanger.

### Solution to Problem

A cooling wind introduction structure relating to a first aspect of the present invention comprises: a power unit that is disposed within a power unit chamber provided at a vehicle front portion, and that generates driving force for a vehicle to travel; a heat exchanger that is disposed at a vehicle rear side with respect to the power unit, and that is cooled by heat exchange with air; a first path that leads air from a first introduction opening for taking air into the power unit chamber (14), that is formed in a lower portion of a front end of the power unit chamber and opens toward a vehicle front side, to the heat exchanger via a vehicle lower side of the power unit; and a second path that leads air from a second introduction opening, that is provided at an upper portion of the power unit chamber, to a vehicle rear side of the heat exchanger via a vehicle upper side of the first path and a vehicle upper side of the heat exchanger.

In accordance with the cooling wind introduction structure relating to the first aspect of the present invention, for example, due to the vehicle traveling or operation of the fan or the like, air is introduced into the first path through the first introduction opening that is formed in the lower portion of the front end of the power unit chamber, and air is introduced into the second path through the second introduction opening that is provided at the upper portion of the power unit chamber. The air that is introduced into the first path is led, via the vehicle lower side of the power unit, as cooling wind to the heat exchanger. This air that is led to the heat exchanger either does not carry out heat exchange with the power unit or hardly carries out heat exchange at all, and therefore, the heat exchanger is effectively cooled.

On the other hand, the air that is introduced into the second path is led as cooling wind to the vehicle rear side of the heat exchanger, via the vehicle upper side of the first path and the vehicle upper side of the heat exchanger. Therefore, this air is, after heat exchange with the power unit, discharged as hot air from the power unit chamber. Because external air is introduced-in while the hot air within the second path of the power unit chamber is discharged in this way, the temperature within the second path of the power unit chamber is kept low. Due thereto, a rise in temperature of the air within the first path due to the heat within the second path of the power unit chamber also is suppressed, and thus, the heat exchanger is effectively cooled by the air that is led from the first path to the heat exchanger.

In a second aspect of the present invention, in the cooling wind introduction structure relating to the first aspect, the second introduction opening is formed in an upper portion of the front end of the power unit chamber, and opens toward the vehicle front side.

In accordance with the cooling wind introduction structure relating to the second aspect of the present invention, the second introduction opening is formed in the upper portion of the front end of the power unit chamber, and is open toward the vehicle front side. Therefore, the air that is introduced-in from the second introduction opening flows from the front end side toward the rear end side at the upper portion space of the power unit chamber interior. Due thereto, the air that is introduced-in from the second introduction opening is, after efficient heat exchange is carried out between the air and the power unit, discharged from the power unit chamber as hot air. Thus, a rise in temperature of the upper portion space of the power unit chamber interior is effectively suppressed.

In a third aspect of the present invention, in the cooling wind introduction structure relating to the first aspect or second aspect, the first path is structured to include: a first duct that leads air from the first introduction opening to a vehicle lower side of the power unit, and a second duct that is disposed at a vehicle rear side of the first duct and a vehicle front side of the heat exchanger, and that leads air, that has passed through the first duct interior, to the heat exchanger.

In accordance with the cooling wind introduction structure relating to the third aspect of the present invention, the air that is introduced-in from the first introduction opening is led by the first duct to the vehicle lower side of the power unit. Then, the air that has passed through the first duct interior is led by the second duct to the heat exchanger. Therefore, air from the vehicle exterior is efficiently led to the heat exchanger.

In a fourth aspect of the present invention, in the cooling wind introduction structure relating to any one aspect of the first aspect through the third aspect, a fan that is disposed at a vehicle rear side with respect to the heat exchanger and that, by operating, generates a first air flow, that passes through the first path from the first introduction opening, and a second air flow, that that passes through the second path from the second introduction opening, is provided.

In accordance with the cooling wind introduction structure relating to the fourth aspect of the present invention, when the fan that is disposed at the vehicle rear side with respect to the heat exchanger operates, the first air flow, that passes through the first path from the first introduction opening, and the second air flow, that passes through the second path from the second introduction opening, are generated. Therefore, the hot air within the second path of the power unit chamber is effectively discharged, and the heat exchanger is cooled effectively. Advantageous Effects of Invention

As described above, the cooling wind introduction structure relating to the first aspect of the present invention has the excellent effect of being able to efficiently cool the heat exchanger.

The cooling wind introduction structure relating to the second aspect of the present invention has the excellent effect that, due to a rise in temperature of the upper portion of the power unit chamber being effectively suppressed, the transmission of heat from the upper portion space toward the lower portion space of the power unit chamber interior also is suppressed, and therefore, a rise in temperature of the air that is led from the first path to the heat exchanger also is effectively suppressed.

The cooling wind introduction structure relating to the third aspect of the present invention has the excellent effect of being able to efficiently lead air from the vehicle exterior to the heat exchanger.

The cooling wind introduction structure relating to the fourth aspect of the present invention has the excellent effect of being able to further improve the cooling performance by the cooling wind.

### BRIEF DESCRIPTION OF DRAWINGS

Fig. 1 is a perspective view showing, in an external view, a front portion of a vehicle to which a cooling wind introduction structure relating to a first embodiment of the present invention is applied.
Fig. 2 is an enlarged sectional view along line 2-2 of Fig. 1.
Fig. 3 is a perspective view showing the cooling wind introduction structure relating to the first embodiment of the present invention.
Fig. 4 is a cross-sectional view seen from the vehicle side surface, showing a cooling wind introduction structure relating to a second aspect of the present invention.
Fig. 5 is a perspective view showing the cooling wind introduction structure relating to the second aspect of the present invention.

### DESCRIPTION OF EMBODIMENTS

### [First Embodiment]

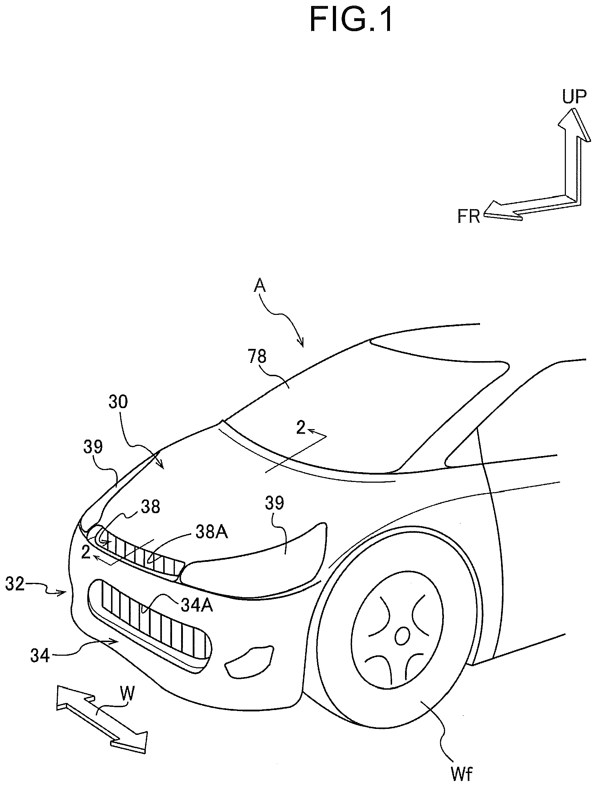

A cooling wind introduction structure 10 relating to a first embodiment of the present invention is described on the basis of Fig. 1 through Fig. 3. Here, the front portion structure of an automobile A to which the cooling wind introduction structure 10 is applied is described first, and then, the concrete structure of the cooling wind introduction structure 10 is described. Note that arrow FR shown appropriately in these drawings indicates the vehicle front side, arrow UP indicates the vehicle upper side, and arrow W indicates the vehicle transverse direction.

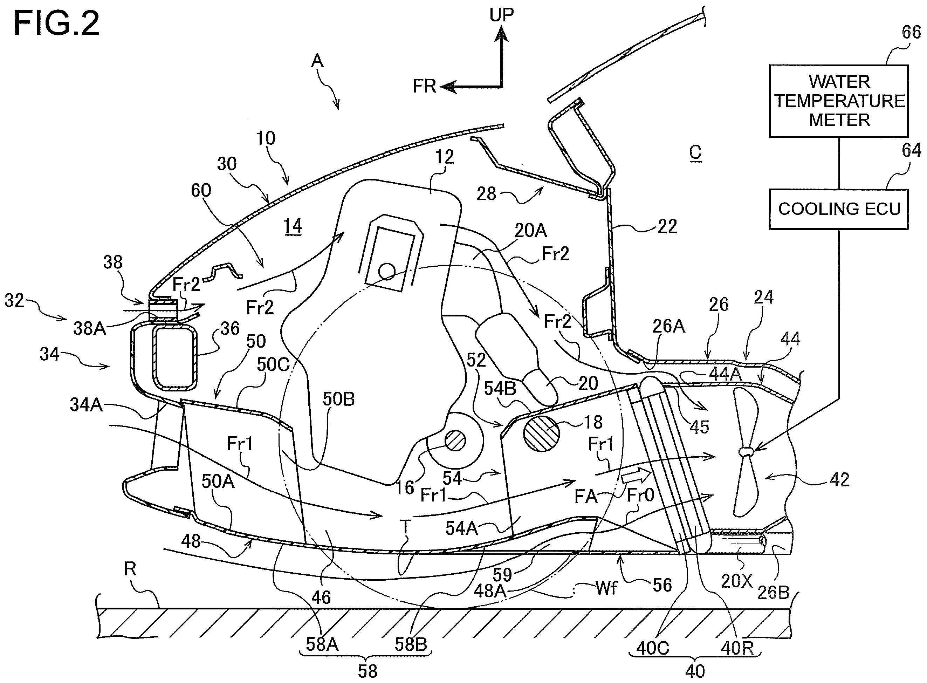

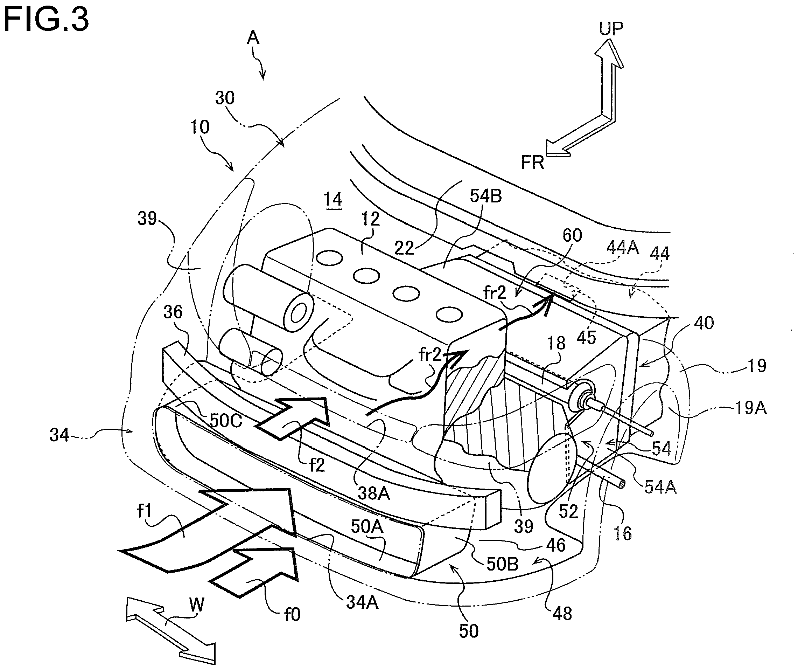

The front portion of the vehicle to which the cooling wind introduction structure 10 is applied is shown in an external perspective view in Fig. 1, and an enlarged sectional view along line 2-2 of Fig. 1 is shown in Fig. 2. Further, the cooling wind introduction structure 10 is shown in a perspective view in Fig. 3.

### (Basic Structure of Vehicle)

As shown in Fig. 2 and Fig. 3, a power unit chamber (in the case of the present embodiment, an element that can also be interpreted as an "engine compartment") 14 is disposed at the front portion of the automobile (vehicle) A, and a power unit 12 is disposed within the power unit chamber 14. The power unit 12 generates driving force for the automobile A to travel, and, in this embodiment, is structured to include an engine, that is an internal combustion engine, and an electric motor that are drive sources for driving front wheels Wf (see Fig. 2) respectively. Accordingly, the automobile A is a hybrid automobile having two drive sources. Note that, in the drawings, the power unit 12 is shown in a simplified manner.

The output shaft of the power unit 12 is connected to a drive shaft 16 that extend in the vehicle transverse direction, and this drive shaft 16 is connected to the front wheels Wf (see Fig. 2) so as to be able to transmit driving force thereto. Further, the front wheels Wf (see Fig. 2) are connected to a steering gear 18, and can be turned in accordance with the steering of a steering wheel (not illustrated). Further, as shown in Fig. 3, a fender liner 19A that is made of resin is mounted to the inner side of a front tire housing portion 19.

The power unit 12 is structured with the main portions thereof being the engine that is disposed laterally and has a crank shaft that runs along the vehicle transverse direction, and a transaxle that is connected to this engine so as to be able to transmit power. The transaxle is structured to include an electric motor, and an unillustrated generator, power dividing mechanism, transmission that is a continuously variable transmission or the like, and the like. Further, in this embodiment, the transaxle is structured to include, for example, an electric motor, a generator, and an inverter that is electrically connected to a battery. Accordingly, the power unit relating to this embodiment can also be interpreted as a power plant.

The power unit chamber 14, in which is disposed the power unit 12 that is structured to include the engine that is an internal combustion engine as described above, can be interpreted as a so-called engine room, and the upper side of the power unit chamber 14 can be opened and closed by a hood 30 (see Fig. 1 and Fig. 2). As shown in Fig. 2, an exhaust pipe 20 is connected via an exhaust manifold 20A (which may be structured to include a catalytic converter) to the engine of the power unit 12. The exhaust pipe 20 passes through the vehicle transverse direction outer side of a second duct 52 that is described later, and passes through a floor tunnel 26 interior, and reaches the rear of the vehicle. Note that the portion, within the floor tunnel 26, of the exhaust pipe 20 is shown by reference numeral 20X in the drawings.

The rear end portion of the power unit chamber 14 and a vehicle cabin C are separated by a dash panel (vehicle body passenger compartment front wall) 22. The lower end portion of the dash panel 22 is joined to the front end portion of a floor panel 24. The floor tunnel 26, that forms an upside-down U-shape that opens downward as seen in a front sectional view, is formed at the central portion in the vehicle transverse direction at the floor panel 24. The lower end portion of a cowl 28 is joined to the upper end portion of the dash panel 22.

On the other hand, a front bumper cover 34 and a grill 38 are disposed at the front end portion of the power unit chamber 14. The front bumper cover 34 structures a portion of a front bumper 32, and, as shown in Fig. 1, is disposed with the longitudinal direction thereof substantially being the vehicle transverse direction, and, in a vehicle plan view, the central portion is formed in a curved shape that swells further toward the vehicle front side than the both end portions, and the both end portions are bent toward the vehicle rear side. As shown in Fig. 2, an air intake port (bumper cover opening portion) 34A that serves as a first introduction opening for taking air into the power unit chamber 14, is formed in the front bumper cover 34. The air intake port 34A is formed at the lower portion of the front end of the power unit chamber 14, and opens toward the vehicle front side. Note that, in Fig. 3, the flow of air that is introduced-in by the air intake port 34A is shown by arrow f1, and the flow of air toward the vehicle lower side of the power unit chamber 14 is shown by arrow f0.

As shown in Fig. 2, a front bumper reinforcement 36 is disposed at the vehicle rear side of the front bumper cover 34, at a position that is separated therefrom by a predetermined distance. The front bumper reinforcement 36 structures a portion of the front bumper 32, and the vertical sectional shape thereof is formed in a rectangular frame shape, and the both end portions in the longitudinal direction thereof are joined to the front end portions of a pair of left and right front side members (not shown).

The aforementioned grill 38 is disposed at the upper side of the vehicle transverse direction intermediate portion at the front bumper cover 34. Note that a pair of left and right headlamps 39 (see Fig. 1) are disposed further toward the vehicle transverse direction outer sides than the grill 38 at the upper side of the both side portions in the vehicle transverse direction at the front bumper cover 34. The grill 38 is disposed between the front end portion of the hood 30 in a closed state and the upper end portion of the front bumper cover 34. An air intake port (grill opening portion) 38A, that serves as a second introduction opening for taking air into the power unit chamber 14, is formed in the grill 38. The air intake port 38A is formed in the upper portion of the front end of the power unit chamber 14, and opens toward the vehicle front side. Note that, in Fig. 3, the flow of air that is introduced-in by the air intake port 38A is shown by arrow f2.

On the other hand, as shown in Fig. 2, at the automobile A to which the cooling wind introduction structure 10 is applied, a cooling unit 40 (an element that is an "air-cooling-type heat exchanger") that serves as a body to be cooled is provided so as to close-off the majority (the portion other than the upper end side) of an opening end 26A at the front side of the floor tunnel 26. Accordingly, in this embodiment, the cooling unit 40 is disposed at the vehicle rear side with respect to the power unit 12. The cooling unit 40 is cooled by heat exchange with air, and is structured to include a radiator 40R and a condenser (condenser) 40C. The radiator 40R is a heat exchanger that circulates cooling water, that serves as a coolant, between the radiator 40R and (the engine or the electric motor of) the water-cooling-type power unit 12, and cools the power unit 12. Further, the condenser 40C is an air-cooling-type heat exchanger that structures (the refrigeration cycle of) an unillustrated air conditioner. Note that, in this embodiment, the cooling unit 40 is structured to include both the radiator 40R and the condenser 40C, but the body to be cooled may be structured so as to include only one of these.

Further, a fan 42 serving as a fan is disposed at the vehicle rear side with respect to the cooling unit 40. Due to operation of the fan 42, the fan 42 generates an airflow (cooling wind) that passes through the cooling unit 40. Namely, due to operation of the fan 42, cooling wind, that carries out heat exchange with the cooling water, passes through the cooling unit 40 from the vehicle front side toward the vehicle rear side. The cooling wind after carrying out heat exchange with the cooling water passes through a downwardly-facing opening end 26B of the floor tunnel 26, and is discharged to the floor lower side.

The fan 42 is electrically connected to a cooling ECU 64 (an element that can be interpreted, in a broad sense, as a "control means"). The cooling ECU 64 is structured so as to, at times of high load of the power unit 12, operate the fan 42, and, at times of low load of the power unit 12, stop the fan 42. Concretely, on the basis of information from a water temperature meter 66 that detects the cooling water temperature, the cooling ECU 64 operates the fan 42 when the cooling water temperature exceeds a first threshold value, and stops the fan 42 when the cooling water temperature is less than a second threshold value that is less than or equal to the first threshold value. In other words, this control can be interpreted as control that operates the fan 42 when the load (generated heat), with respect to the cooling capacity in a state in which the fan 42 is not operated, is high.

The outer peripheral side of the fan 42 is covered by a fan shroud 44. An opening portion at the front end side of the fan shroud 44 is disposed adjacent to the vehicle rear side with respect to the cooling unit 40. Further, as shown in Fig. 3, a cut-out portion 44A is formed in the vehicle transverse direction central portion at the front end portion side of the upper end portion of the fan shroud 44, so as to form an interstice between it and the upper end portion of the cooling unit 40. In other words, a communication hole 45 is structured by this cut-out portion 44A and the upper end portion of the cooling unit 40. As shown in Fig. 2, the space between the cooling unit 40 and the fan 42, and the space at the vehicle rear side of the power unit 12, are communicated by this communication hole 45.

The cooling wind introduction structure 10 for efficiently cooling the cooling unit 40 is described in detail hereinafter.

### (Structure of Cooling Wind Introduction Structure)

As shown in Fig. 2, a first path 46, that leads air (cooling wind) from the air intake port 34A, that is formed in the lower portion of the front end of the power unit 14, via the vehicle lower side of the power unit 12 to the cooling unit 40, is formed at the cooling wind introduction structure 10. Namely, the first path 46 is a cooling wind path that causes the cooling wind, that is for cooling the cooling unit 40, to flow. The upper wall portion of the first path 46 is structured by an upper wall portion 50C of a first duct 50 that is described in detail later, and the lower surface portion of the power unit 12, and the upper wall portion of the second duct 52 that is described in detail later (an upper wall portion 54B of a shroud 54), and the like. Further, the lower wall portion of the first path 46 is structured by an under cover 48. This under cover 48 covers the power unit chamber 14 from the lower side in the vehicle vertical direction.

The first path 46 has the first duct 50 that leads air from the air intake port 34A toward the vehicle lower side of the power unit 12. The rear end portion of the first duct 50 for leading air is disposed in the vicinity of the lower end portion of the power unit 12. Further, the opening width (the width along the vehicle transverse direction) of the air intake port 34A, and the flow path width (the width along the vehicle transverse direction) of the first duct 50, are set to be greater than or equal to the width along the vehicle transverse direction of the cooling unit 40.

In the present embodiment, as an example, the first duct 50 is made to be a region that is molded integrally with the under cover 48. A lower wall portion 50A of the first duct 50 is structured by the cover main body of the under cover 48, and side wall portions 50B (see Fig. 3) at both sides in the vehicle transverse direction are structured by standing walls that are provided to stand from the cover main body of the under cover 48, and the upper wall portion 50C integrally connects the upper end portions of the pair of side wall portions 50B (see Fig. 3).

Note that, in the present embodiment, the first duct 50 is a region that is molded integrally with the under cover 48, but the first duct (50) may be made to be a body that is separate from the under cover (48). Further, as another modified example, the first duct (50) may be structured such that portions thereof (e.g., the lower wall portion 50A and the side wall portions 50B) are molded integrally with the under cover (48), and other portions thereof (e.g., the upper wall portion 50C) are made to be a body separate from the under cover (48). As an example, the upper wall portion (50C) of the first duct (50) may be structured by a separate member such as an oil pan (not shown) or the like.

The first path 46 has the second duct 52 that is disposed at the vehicle rear side of the first duct 50 and at the vehicle front side of the cooling unit 40. The front end portion of the second duct 52 is disposed so as to be apart from the rear end portion of the first duct 50, and the second duct 52 is a duct for leading the air, that has passed through the first duct 50 interior, to the cooling unit 40. Further, the lower wall portion of the second duct 52 is structured by the under cover 48, and the side wall portions and the upper wall portion are structured by the shroud 54.

The shroud 54 forms a substantially upside-down U shape that opens downward in a vehicle front view, and extends substantially in the vehicle longitudinal direction (more correctly, such that the upper surface thereof is inclined slightly toward the vehicle upper side while heading toward the vehicle rear side). Namely, the shroud 54 has a pair of left and right side wall portions 54A that face one another in the vehicle transverse direction, and the upper wall portion 54B that connects the upper edge portions of the pair of side wall portions 54A. The side wall portions 54A structure the side wall portions of the second duct 52, and the upper wall portion 54B structures the upper wall portion of the second duct 52.

The opening portion at the rear end side of the shroud 54 is mounted to the outer peripheral edge portion of the condenser 40C of the cooling unit 40, and is disposed so as to face the opening portion at the front end side of the fan shroud 44. Note that, in the present embodiment, the shroud 54 and the fan shroud 44 are made to be separate bodies, but there may be a structure in which the shroud 54 and the fan shroud 44 are made integral, and, in the upper wall portion thereof, a through-hole is formed at the upper side of the region between the cooling unit 40 and the fan 42. The flow path of the second duct 52 that is structured to include the shroud 54 is communicated with the front tunnel 26 via the cooling unit 40.

Further, the opening portion at the lower end side of the shroud 54 faces toward the under cover 48 side, and the opening portion at the front end side faces toward the rear end opening portion side of the first duct 50. Moreover, although detailed illustration thereof is omitted, the shroud 54 in this embodiment is made into a unit (made into a module) so as to be able to be handled integrally with the cooling unit 40. Further, in this embodiment, the cooling unit 40 is disposed at an incline (a forward incline) such that the upper end side thereof is positioned, further than the lower end side thereof,
toward the vehicle front side.

At the vehicle lower side of the shroud 54, an air intake port (third introduction opening) 48A, that is for leading the traveling wind, that flows between the under cover 48 and a road surface R, to the cooling unit 40 via the rear portion space of the second duct 52 interior, is formed so as to pass-through the under cover 48. The air intake port 48A opens toward the road surface R, and is set at the rear portion side of the region between the left and right front wheels Wf. A lower duct 56 is formed as a portion of the under cover 48, from the air intake port 48A toward the rear portion space side of the second duct 52 interior. The lower duct 56 is made to be a duct that leads air from the air intake port 48A to the cooling unit 40. Further, a portion of the upper wall of the lower duct 56 is integral with (also serves as) the front side lower wall of the second duct 52.

Further, a Venturi wall (inclined wall) 58 is formed at the under cover 48 at the front side lower wall of the second duct 52 and the vehicle front side thereof. The Venturi wall 58 is structured so as to form a throttled portion (throat portion) T that is nearest to the road surface R, at the vehicle front side of the second duct 58 at the under cover 48. Concretely, the Venturi wall 58 is structured with the main portions thereof being a front side inclined wall 58A that slopes downward from the front end of the under cover 48 to the throttled portion T, and a rear side inclined wall 58B that slopes upward from the throttled portion T to the front side lower wall of the second duct 52. At the cooling wind introduction structure 10 that is equipped with this Venturi wall 58, the traveling wind, that heads toward the vehicle rear side at the lower side of the under cover 48, flows along the Venturi wall 58 toward the lower portion side of the cooling unit 40.

Note that plural ribs 59, that extend in the vehicle longitudinal direction and are disposed in parallel in the vehicle transverse direction, extend toward the vehicle lower side at the lower surface of the rear side inclined wall 58B. These ribs 59 are provided in order to prevent foreign matter, such as small stones, sand, mud, and the like, from penetrating into the rear portion space of the second duct 52. Further, the rear end portions of the plural ribs 59 connect the upper wall and the lower wall of the lower duct 56, and also serve to reinforce the lower duct 56. Such a region for reinforcing the lower duct 56 may be provided at all of the ribs 59, or may be provided at several of the plural ribs 59. Further, a reinforcing portion, that connects the upper wall and the lower wall of the lower duct 56, may be provided separately from the ribs 59.

Due to the above, accompanying the traveling of the automobile A, a first air flow Fr1, that passes through the first path 46 from the air intake port 34A, and a lower air flow FrO, that passes through the lower duct 56 and goes via the interior of the rear portion space of the second duct 52, are led to the cooling unit 40. Note that arrows Fr1 in the drawings indicate the first air flow and indicate an external air introduction path, and arrow Fr0 in the drawings indicates the lower side air flow and indicates an external air introduction path. In this embodiment, there is a structure in which cooling wind (the lower side air flow Fr0 and the first air flow Fr1) that is based on the traveling wind passes along a direction (see arrow FA shown in Fig. 2) substantially orthogonal to the front surface of the cooling unit 40. Further, at the cooling wind introduction structure 10, due to operation of the fan 42 as well, cooling wind (the lower side air flow Fr0 and the first air flow Fr1) is generated. Namely, there is a structure in which, due to the fan 42 operating, cooling wind (the lower side air flow Fr0 and the first air flow Fr1) is generated even at times of low speed traveling or at times of stoppage of the automobile A.

On the other hand, the space, that is at the vehicle rear side of the cooling unit 40 and the vehicle front side (upstream side) of the fan 42, communicates with the rear side upper portion space of the interior of the power unit chamber 14. Due thereto, a second path 60, that leads air from the air intake port 38A, that is formed at the upper portion of the front end of the power unit 14, via the vehicle upper side of the first path 46 and the vehicle upper side of the cooling unit 40 to the vehicle rear side of the cooling unit 40, is formed at the cooling wind introduction structure 10.

The second path 60 structures the wall portion from the vehicle upper side to the vehicle rear side with respect to arrows Fr2 of Fig. 2 (a second air flow that passes through the second path 60, or in other words, an external air introduction path), by the hood 30, the cowl 28, the dash panel 22, the floor tunnel 26, and the fan shroud 44 and the like. Further, as shown in Fig. 3, the second path 60 structures the wall portion at the vehicle lower side, by the upper wall portion 50C of the first duct 50, the upper surface portion of the power unit 12, the upper wall portion of the second duct 52 (the upper wall portion 54B of the shroud 54), and the upper surface portions of parts installed within the power unit chamber 14 of which detailed illustration is omitted.

In other words, as shown in Fig. 2, the upper wall portion 50C of the first duct 50 vertically divides the space that is further toward the vehicle front side than the power unit 12 at the power unit chamber 14, and the upper wall portion of the second duct 52 (the upper wall portion 54B of the shroud 54) vertically divides the space that is further toward the vehicle rear side than the power unit 12 at the power unit chamber 14. Further, the second path 60 and the first path 46 are formed so as to vertically divide the power unit chamber 14.

The second air flow Fr2, that passes through the second path 60 from the air intake port 38A, is generated accompanying the traveling of the automobile A, and is generated also by operation of the fan 42. Namely, there is a structure in which, due to the fan 42 operating, the second air flow Fr2 that becomes a cooling wind is generated even at times of low speed traveling or at times of stoppage of the automobile A.

Due to the above, at the cooling wind introduction structure 10 of the present embodiment, there is a structure in which the temperature environment within the power unit chamber 14 is divided vertically.

### (Operation/Effects)

The operation and effects of the above-described embodiment are described next.

In the automobile A to which the cooling wind introduction structure 10 of the above-described structure is applied, when the cooling water temperature detected by the water temperature meter 66 does not exceed a first threshold value, the cooling ECU 64 maintains the stopped state of the fan 42. At such times when the power unit 12 is running in a low load state, external air passes through the air intake ports 34A, 48A, 38A and is introduced into the power unit chamber 14 due to the traveling wind that accompanies the traveling of the automobile A.

Concretely, external air is introduced into the first path 46 through the air intake port 34A that is formed in the lower portion of the front end of the power unit chamber 14. Further, external air is introduced into the lower duct 56 through the air intake port 48A that is formed in the under cover 48. Moreover, external air is introduced into the second path 60 through the air intake port 38A that is formed in the upper portion of the front end of the power unit chamber 14. Further, these external airs that have been introduced-in function as cooling wind (the lower air flow Fr0, the first air flow Fr1, and the second air flow Fr2).

The air, that is introduced into the first path 46 from the air intake port 34A of the front bumper cover 34, is led to the vehicle lower side of the power unit 12 by the first duct 50. Further, the air that has passed through the interior of the first duct 50 is, via the vehicle lower side of the power unit 12, led to the cooling unit 40 as cooling wind by the second duct 52. This air that is led to the cooling unit 40 hardly carries out any heat exchange at all with the power unit 12, and therefore, the cooling unit 40 is effectively cooled by the air from the vehicle exterior. Further, in addition to this, the cooling unit 40 is cooled by the air that is introduced-in by the lower duct 56.

Due thereto, the cooling water, that is circulating between the power unit 12 and the radiator 40R of the cooling unit 40, is cooled by heat exchange with air at the cooling unit 40. Further, when the air conditioner is operating, coolant is circulated in the order of the condenser 40C of the cooling unit 40, an expansion valve, an evaporator and a compressor, and a refrigeration cycle is formed, and the condenser 40C of the cooling unit 40 exhibits the function of cooling and condensing the coolant by heat exchange with air.

Note that, to add supplemental description from another standpoint in comparison with a comparative structure, in a comparative structure that is such that, for example, the first duct 50 and the second duct 52 are not formed and the upper wall portion of the lower duct (56) extends to the upper end portion of the cooling unit (40), basically, at times of traveling on gravel roads or the like, it is easy for foreign matter to penetrate in from the lower duct (56) and it is easy for this foreign matter to stick to the cooling unit (40). In contrast, in the present embodiment, the majority of the air that is passed through the cooling unit 40 is air that has passed through the first path 46 of the power unit chamber 14, and therefore, as compared with this comparative example, the penetration of foreign matter and the sticking of foreign matter to the cooling unit 40 are suppressed.

On the other hand, in the present embodiment, the external air, that is introduced into the second path 60 from the air intake port 38A of the grill 38, passes through the vehicle upper side of the first path 46 (the upper portion of the power unit chamber 14) as cooling wind, and, via the vehicle upper side of the cooling unit 40, is led to the vehicle rear side of the cooling unit 40. Therefore, this air flows from the front end side toward the rear end side at the upper portion of the power unit chamber 14, and, after efficient heat exchange is carried out between this air and the power unit 12 (the air moves toward the vehicle upper side during idling at times of stoppage), the air is discharged as hot air from the power unit chamber 14. In this way, external air is introduced-in while the hot air that is within the second path 60 of the power unit chamber 14 is discharged, and therefore, the temperature within the second path 60 of the power unit chamber 14 is kept low. Due thereto, a rise in temperature of the air within the first path 46 due to heat within the second path 60 of the power unit chamber 14 also is suppressed, and thus, the cooling unit 40 is effectively cooled by the air that is led to the cooling unit 40 from the first path 46.

Further, when the cooling water temperature detected by the water temperature meter 66 exceeds the first threshold value, the cooling ECU 64 operates the fan 42. Thereupon, the lower side air flow Fr0 that passes through the lower duct 56 from the air intake port 48A, the first air flow Fr1 that passes through the first path 46 from the air intake port 34A, and the second air flow Fr2 that passes through the second path 60 from the air intake port 38A are generated (or the flow velocity thereof is increased) due to the pressure difference at the front and rear of the fan 42 that is disposed at the vehicle rear side with respect to the cooling unit 40. Therefore, a sufficient volume of cooling wind is ensured even when the traveling speed of the automobile A is low or when the automobile A is stopped. Due thereto, the hot air of the second path 60 of the power unit chamber 14 is effectively discharged (sucked-out) to the exterior, and the cooling unit 40 is effectively cooled by the lower side air flow Fr0 and the first air flow Fr1.

Further, because the temperature environment within the power unit chamber 14 is divided vertically by the first path 46 and the second path 60, the first air flow Fr1, that is relatively low temperature, and the second air flow Fr2, that is relatively high temperature (due to the heat of the engine of the power unit 12), respectively flow smoothly. Accordingly, whether the fan 42 is not being operated during traveling of the automobile A, or whether the fan 42 is being operated, the air that has been introduced into the power unit chamber 14 is efficiently discharged, and as a result, the cooling unit 40 is cooled efficiently (an improvement in the cooling performance).

As described above, in accordance with the cooling wind introduction structure 10 relating to the present embodiment, the cooling unit 40 can be cooled efficiently. Further, accompanying this, heat-resistant materials (parts that are countermeasures to heat), that have relatively low heat-resistance performance, can be applied to the power unit chamber 14 interior, and therefore, a decrease in cost can also be realized.

Further, in the present embodiment, because the cooling unit 40 can be disposed at the rear portion or the rear side of the power unit chamber 14, there is a structure that is advantageous in cases of utilizing a so-called short overhang vehicle in which the length, in the vehicle longitudinal direction, of the region further toward the vehicle front side than the front wheels Wf is short. Further, by being able to place the cooling unit 40 at the rear portion or the rear side of the power unit chamber 14, the yield strength of the distal end portion sides of the front side members and the like can be set to be low, as compared with a case in which the cooling unit 40 is disposed at the vehicle front end portion side, and therefore, this contributes also to a lightening of weight. Further, for example, the power unit 12 and the cooling unit 40 can be made into a module and installed in a vehicle as well.

### [Second Embodiment]

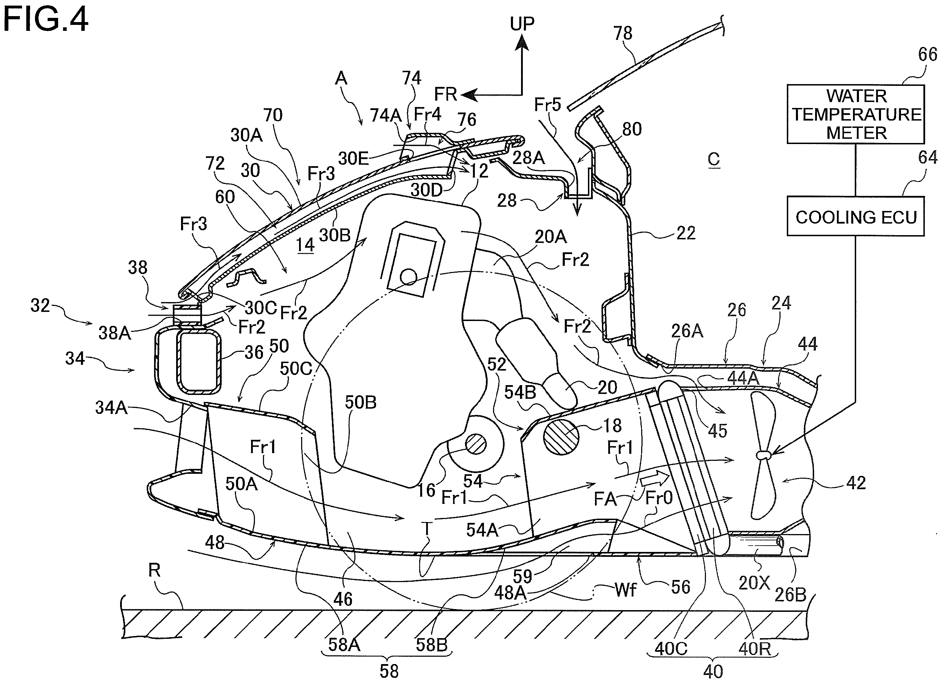

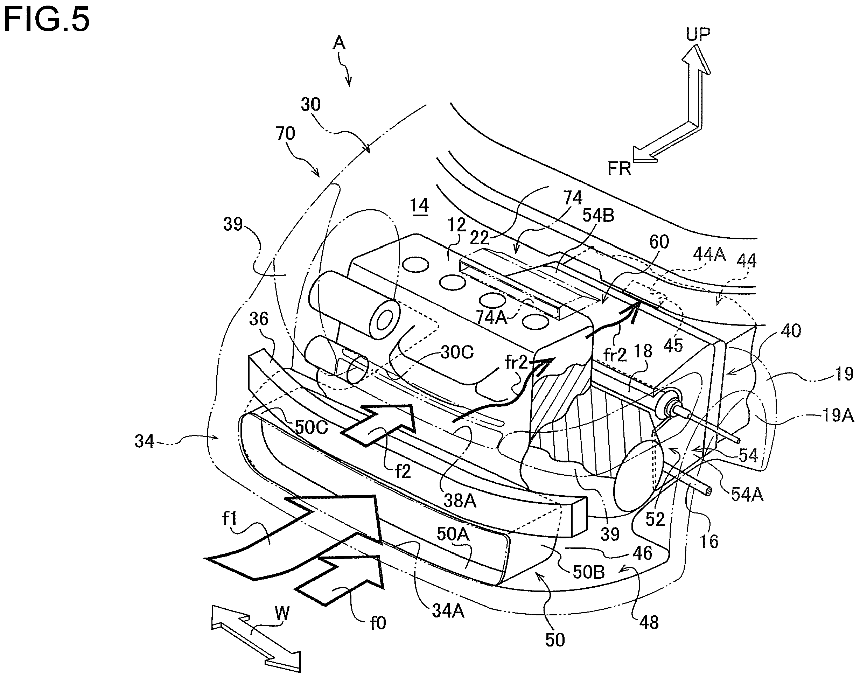

A cooling wind introduction structure relating to a second embodiment of the present invention is described next by using Fig. 4 and Fig. 5. A cooling wind introduction structure 70 relating to the second embodiment of the present invention is shown in Fig. 4 in a cross-sectional view seen from the vehicle side surface in a state of being cut at the vehicle transverse direction center of the automobile A (a cross-sectional view corresponding to Fig. 2 in the first embodiment). Further, the cooling wind introduction structure 70 is shown in Fig. 5 in a perspective view. Note that structural portions that are substantially similar to those of the first embodiment are denoted by the same reference numerals, and description thereof is omitted.

As shown in Fig. 4, the hood 30 has a hood outer panel 30A that structures a hood outer plate, and a hood inner panel 30B that is disposed at the hood lower side with respect to the hood outer panel 30A and that structures a hood inner plate. The peripheral edge portions of the hood outer panel 30A and the hood inner panel 3 OB are joined together by a hemming process. Further, in the state in which the hood outer panel 30A and the hood inner panel 30B are joined together, the both form a closed cross-sectional structure, and a gap in the hood vertical direction is formed between the both.

An air intake port (hood opening portion) 30C that serves as a second introduction opening is formed in the front end portion of the hood inner panel 30B. Due to the air intake port 30C being formed in the hood that separates the power unit chamber 14 and the space at the vehicle exterior at the upper side of the power unit chamber 14, the air intake port 30C is provided at the upper portion of the power unit chamber 14. Further, in the state in which the hood 30 is closed, the air intake port 30C opens obliquely toward the vehicle front side and lower side. An air flow-through hole 30D is formed so as to pass-through the rear portion of the hood inner panel 30B, at the upper side of the power unit 12. Namely, the internal space of the hood 30, at the rear portion side thereof, communicates with the rear side upper portion space of the interior of the power unit chamber 14. Due thereto, a cooling path 72, that serves as a second path and that leads air from the air intake port 30C of the hood 30 to vehicle rear side of the cooling unit 40 via a flow path in the hood longitudinal direction that runs along the hood inner panel 30B, and the rear side upper portion space of the interior of the power unit chamber 14, and the vehicle upper side of the cooling unit 40, is formed at the cooling wind introduction structure 70.

Note that the flow path in the hood longitudinal direction that runs along the hood inner panel 30B, and the rear side upper portion space of the interior of the power unit chamber 14, are set at the vehicle upper side of the first path 46. Further, arrows Fr3 in the drawings indicate the air flow that passes through the flow path in the hood longitudinal direction that runs along the hood inner panel 30B (in other words, an external air introduction path).

On the other hand, an air flow-through hole 30E is formed so as to pass-through the rear portion of the hood outer panel 30A, at the side that is obliquely toward the upper side and front side of the hood with respect to the air flow-through hole 30D of the hood inner panel 30B. A hood bulge 74 is mounted to the outer peripheral portion of the air flow-through hole 30E at the hood upper side of the hood outer panel 30A. As shown in Fig. 5, the hood bulge 74 is provided at the hood transverse direction central portion of the hood 30. As shown in Fig. 4 and Fig. 5, an air intake port (hood bulge opening portion) 74A, that serves as a second introduction opening and passes-through from the hood front side toward the hood lower side, is formed in the hood bulge 74. As shown in Fig. 4, the air intake port 74A of the hood bulge 74 is provided at a position corresponding to the air flow-through hole 30E of the hood outer panel 30A, or in other words, at the upper portion of the power unit chamber 14, and is an entrance for taking-in air into the power unit chamber 14 via the rear side space of the interior of the hood 30. Due thereto, a cooling path 76, that serves as a second path and that leads air from the air intake port 74A of the hood bulge 74 to the vehicle rear side of the cooling unit 40 via the rear side space of the interior of the hood 30, and the rear side upper portion space of the interior of the power unit chamber 14, and the vehicle upper side of the cooling unit 40, is formed at the cooling wind introduction structure 70.

Note that the rear side space of the interior of the hood 30, and the rear side upper portion space of the interior of the power unit chamber 14, are set at the vehicle upper side of the first path 46. Further, arrow Fr4 in the drawings indicates the air flow that passes through the interior of the hood bulge 74 and the rear side space of the interior of the hood 30 (in other words, an external air introduction path).

Further, the cowl 28 that is provided at the rear end portion side of the hood 30 is formed in a trough shape, and extends in the vehicle transverse direction along the lower edge of a front glass 78. An air intake port (cowl opening portion) 28A, that serves as a second introduction opening that passes-through substantially in the vertical direction, is formed in the cowl 28. Namely, the air intake port 28A of the cowl 28 is provided at the upper portion of the power unit chamber 14. Due thereto, a cooling path 80, that serves as a second path and that leads air from the air intake port 28A of the cowl 28 to the vehicle rear side of the cooling unit 40 via the rear side upper portion space of the interior of the power unit chamber 14 and the vehicle upper side of the cooling unit 40, is formed at the cooling wind introduction structure 70.

Note that the interior space of the cowl 28, and the rear side upper portion space of the interior of the power unit chamber 14, are set at the vehicle upper side of the first path 46. Further, arrow Fr5 in the drawings indicates the air flow that passes through the interior space of the cowl 28 (in other words, an external air introduction path). Note that illustration of the cowl 28 is omitted in Fig. 5.

In accordance with the structure of the present embodiment, for example, at times of vehicle traveling or at times of operation of the fan, in addition to operation that is similar to that of the first embodiment, air is introduced into the cooling paths 72, 76, 80 through the air intake ports 30C, 74A, 28A that are provided at the upper portion of the power unit chamber 14 shown in Fig. 4. Further, the air that is introduced into the cooling paths 72, 76, 80, together with the air that is introduced into the second path 60, also is led as cooling wind to the vehicle rear side of the cooling unit 40 via the vehicle upper side of the first path 46 and the vehicle upper side of the cooling unit 40. Therefore, these airs as well are, after heat exchange with the power unit 12, discharged as hot air from the power unit chamber 14. Due thereto, by introducing a greater amount of air while the hot air within the upper portion space of the power unit chamber 14 is discharged, the temperature within the upper portion space of the power unit chamber 14 is kept low. Accordingly, rising of the temperature of the air within the first path 46 due to the heat within the upper portion space of the power unit chamber 14 also is suppressed effectively, and therefore, the cooling unit 40 is cooled more efficiently by the air that is led from the first path 46 to the cooling unit 40.

### [Supplementary Explanation of Embodiments]

Note that, in the above-described embodiments, the first path 46 has the first duct 50 and the second duct 52, and such a structure is preferable. However, there may be a structure in which, for example, the first path and the second path are partitioned vertically by an oil pan and a differential case or the like, or by a part used exclusively for partitioning.

Further, as a modified example of the above-described embodiments, the cooling unit 40 (the body to be cooled) may be structured such that the entirety thereof is disposed within the second duct 52, or the entirety thereof may be disposed at the vehicle rear side with respect to the second duct 52.

Further, as a modified example of the above-described embodiments, a portion of or the entirety of the cooling unit 40 (the body to be cooled) may be disposed further toward the vehicle front side than the opening end 26A at the front side of the floor tunnel 26.

Further, in the above-described embodiments, at the under cover 48, the air intake port 48A is formed, and the lower duct 56 is formed, but there may be a structure in which these are not formed. In this case, the under cover 48 may be formed in a flat shape so as to be substantially parallel to the road surface R, instead of the Venturi wall 58 that is inclined.

Further, although the power unit 12 is structured to include an internal combustion engine and a motor in the above-described embodiments, the power unit may be a structure that does not include a motor (an engine vehicle), or may be a structure that does not include an internal combustion engine (an electric automobile).

Further, in the above-described embodiments, due to the fan 42 operating, the fan 42 generates the first air flow Fr1 that passes through the first path 46 from the air intake port 34A, and the second air flow Fr2 that passes through the second path 60 from the air intake port 38A, and in the second embodiment, further generates the air flows Fr3, Fr4, Fr5 that pass through the cooling paths 72, 76, 80 from the air intake ports 30C, 74A, 28A, and such a structure is preferable. However, for example, there can be a structure in which, due to the fan operating, the fan generates only the first air flow that passes through the first path from the first introduction opening (without generating the second air flow that passes through the second path from the second introduction opening).

Further, a blower that serves as a fan may be applied instead of the fan 42 of the above-described embodiments.

Further, as a modified example of the above-described second embodiment, the air intake port 38A may be not provided, and any one among the three air intake ports 30C, 74A, 28A may be provided. Namely, the second path 60 may be not provided, and any one among the three cooling paths 72, 76, 80 that serve as second paths may be provided. Further, as another modified example of the above-described second embodiment, any two among the four air intake ports 38A, 30C, 74A, 28A may be provided. Namely, any two among the total of four paths, that are the second path 60 plus the three cooling paths 72, 76, 80 serving as second paths, may be provided. Moreover, as another modified example of the above-described second embodiment, any three among the four air intake ports 38A, 30C, 74A, 28A may be provided. Namely, any three among the total of four paths, that are the second path 60 plus the three cooling paths 72, 76, 80 serving as second paths, may be provided.

## Claims

1. A cooling wind introduction structure (10) comprising:
a power unit (12) that is disposed within a power unit chamber (14) provided at a vehicle front portion, and that generates driving force for a vehicle to travel;
a heat exchanger (40) that is disposed at a vehicle rear side with respect to the power unit (12), and that is cooled by heat exchange with air; **characterized by** a first path (46) that leads air from a first introduction opening (34A) for taking air into the power unit chamber (14), that is formed in a lower portion of a front end of the power unit chamber (14) and opens toward a vehicle front side, to the heat exchanger (40), via a vehicle lower side of the power unit (12); and
a second path (60) that leads air from a second introduction opening (38A), that is provided at an upper portion of the power unit chamber (14), to a vehicle rear side of the heat exchanger (40), via a vehicle upper side of the first path (46) and a vehicle upper side of the heat exchanger (40).

2. The cooling wind introduction structure (10) of Claim 1, wherein the second introduction opening (38A) is formed in an upper portion of the front end of the power unit chamber (14), and opens toward the vehicle front side.

3. The cooling wind introduction structure (10) of Claim 1 or Claim 2, wherein the first path (46) is structured to include:
a first duct (50) that leads air from the first introduction opening (34A) to a vehicle lower side of the power unit (12), and
a second duct (52) that is disposed at a vehicle rear side of the first duct (50) and a vehicle front side of the heat exchanger (40), and that leads air, that has passed through the first duct interior, to the heat exchanger (40).

4. The cooling wind introduction structure (10) of any one of Claim 1 through Claim 3, further comprising a fan (42) that is disposed at a vehicle rear side with respect to the heat exchanger (40) and that, by operating, generates a first air flow, that passes through the first path (46) from the first introduction opening (34A), and a second air flow, that that passes through the second path (60) from the second introduction opening (38A).

## Patentansprüche

1. Kühlwind-Einleitungsstruktur (10) mit:
einer Leistungseinheit (12), die in einer Leistungseinheitskammer (14) an einem Fahrzeugfrontabschnitt angeordnet ist und eine Antriebskraft zum Fahren eines Fahrzeugs erzeugt;
einem Wärmetauscher (40), der fahrzeugheckseitig der Leistungseinheit (12) angeordnet ist und durch Wärmetausch mit Luft gekühlt wird;
einem ersten Pfad (46), der Luft von einer ersten Einleitungsöffnung (34A) zum Fördern von Luft in die Leistungseinheitskammer (14), die in einem unteren Abschnitt eines vorderen Endes der Leistungseinheitskammer (14) gebildet ist und zu einer Fahrzeugfrontseite offen ist, über eine Fahrzeugunterseite der Leistungseinheit (12) zu dem Wärmetauscher (40) leitet; und
einem zweiten Pfad (60), der Luft von einer zweiten Einleitungsöffnung (38A), die an einem oberen Abschnitt der Leistungseinheitskammer (14) angeordnet ist, über eine Fahrzeugoberseite des ersten Pfads (46) und eine Fahrzeugoberseite des Wärmetauschers (40) zu einer Fahrzeugheckseite des Wärmetauschers (40) leitet.

2. Kühlwind-Einleitungsstruktur (10) nach Anspruch 1, wobei die zweite Einleitungsöffnung (38A) in einem oberen Abschnitt des vorderen Endes der Leistungseinheitskammer (14) gebildet und zur Fahrzeugfrontseite offen ist.

3. Kühlwind-Einleitungsstruktur (10) nach Anspruch 1 oder 2, wobei der erste Pfad (46) umfasst:
einen ersten Kanal (50), der Luft von der ersten Einleitungsöffnung (34A) zu einer Fahrzeugunterseite der Leistungseinheit (12) leitet, und
einen zweiten Kanal (52), der fahrzeugheckseitig des ersten Kanals (50) und fahrzeugfrontseitig des Wärmetauschers (40) angeordnet ist und Luft, die durch den ersten Kanal geströmt ist, zu dem Wärmetauscher (40) leitet.

4. Kühlwind-Einleitungsstruktur (10) nach einem der Ansprüche 1 bis 3, ferner umfassend einen Ventilator (42), der fahrzeugheckseitig des Wärmetauscher (40) angeordnet ist und der, im Betrieb, eine erste Luftströmung erzeugt, die von der ersten Einleitungsöffnung (34A) durch den ersten Pfad (46) strömt, und eine zweite Luftströmung erzeugt, die von der zweiten Einleitungsöffnung (38A) durch den zweiten Pfad (60) strömt.

## Revendications

1. Structure d'introduction d'air de refroidissement (10) comprenant :
une unité motrice (12) qui est disposée dans une chambre d'unité motrice (14) fournie sur une portion avant de véhicule, et qui produit une force motrice pour un véhicule à déplacer ;
un échangeur de chaleur (40) qui est disposé sur un côté arrière de véhicule par rapport à l'unité motrice (12), et qui est refroidi par échange de chaleur avec de l'air ;
**caractérisée par**
une première trajectoire (46) qui amène de l'air d'une première ouverture d'introduction (34A) pour prendre de l'air dans la chambre d'unité motrice (14), qui est formée dans une portion inférieure d'une extrémité avant de la chambre d'unité motrice (14) et qui s'ouvre vers un côté avant de véhicule, vers l'échangeur de chaleur (40), via un côté inférieur de véhicule de l'unité motrice (12) ; et
une seconde trajectoire (60) qui amène de l'air d'une seconde ouverture d'introduction (38A), qui est fournie sur une portion supérieure de la chambre d'unité motrice (14), vers un côté arrière de véhicule de l'échangeur de chaleur (40), via un côté supérieur de véhicule de la première trajectoire (46) et un côté supérieur de véhicule de l'échangeur de chaleur (40).

2. Structure d'introduction d'air de refroidissement (10) selon la revendication 1, dans laquelle la seconde ouverture d'introduction (38A) est formée dans une portion supérieure de l'extrémité avant de la chambre d'unité motrice (14), et s'ouvre vers le côté avant de véhicule.

3. Structure d'introduction d'air de refroidissement (10) selon la revendication 1 ou la revendication 2, dans laquelle la première trajectoire (46) est structurée pour comprendre :
un premier conduit (50) qui amène de l'air de la première ouverture d'introduction (34A) vers un côté inférieur de véhicule de l'unité motrice (12), et
un second conduit (52) qui est disposé sur un côté arrière de véhicule du premier conduit (50) et un côté avant de véhicule de l'échangeur de chaleur (40), et qui amène de l'air, qui est passé à travers le premier intérieur de conduit, vers l'échangeur de chaleur (40).

4. Structure d'introduction d'air de refroidissement (10) selon l'une quelconque de la revendication 1 à la revendication 3, comprenant de plus un ventilateur (42) qui est disposé sur un côté arrière de véhicule par rapport à l'échangeur de chaleur (40) et qui, lors du fonctionnement, produit un premier écoulement d'air, qui passe à travers la première trajectoire (46) à partir de la première ouverture d'introduction (34A), et un second écoulement d'air, qui passe à travers la seconde trajectoire (60) de la seconde ouverture d'introduction (38A).
